# EUROPEAN PATENT APPLICATION

(11) **EP 1 650 676 A1**
(43) Date of publication of application: **26.04.2006**
(21) Application number: 05109242.7
(22) Date of filing: 05.10.2005
(51) Int. Cl.: G06F 17/30

(54) **Analyzing operational data of a search system**

(30) Priority: 20.10.2004 US 969567
(71) Applicant: MICROSOFT CORPORATION, Redmond, Washington 98052-6399 (US)
(72) Inventor: Anderson, Blake E., 98052, Redmond (US); Zhang, Ying, 98052, Redmond (US); Behr, Frederic H Jr., 98052, Redmond (US); Finger, James C., 98052, Redmond (US); Marsman, Jennifer J., 98052, Redmond (US); Karnawat, Kuldeep, 98052, Redmond (US); Mydland, Mark B., 98052, Redmond (US); Malolepsy, Paul M., 98052, Redmond (US); Shimizu, Takeshi, 98052, Redmond (US); White, Thomas D., 98052, Redmond (US)
(74) Representative: Zimmer, Franz-Josef

(57) **Abstract**

A system analyzes data from a search engine. A User Search Bundler analyzes User Searches groups similar User Searches into User Search Bundles, and an Intent Processor produces Intents based on the User Search Bundles. A Factor Generator considers User Searches and related information to produce Factors, where each Factor is with regard to a particular Result from a set of Search Results. A Relevance Classifier receives the Factors and operates based thereon to produce a Judgment for each Result. A Metric Generator produces Metrics based on the Factors and the Judgments, and, a data synthesizer formats extracted data into databases.

## Description

### TECHNICAL FIELD

The present invention relates to a system and method for analyzing data including data compiled during operation of a system such as a system for responding to requests for searches. More particularly, the present invention relates to such a system and method that analyzes relatively large quantities of data for purposes including improving responses and maintaining system performance.

### BACKGROUND OF THE INVENTION

In connection with a system such as a typical search engine, a user accessing same requests a search by entering a search string or the like that contains one or more search terms, perhaps with Boolean operators. In response, the search engine searches one or more databases based on the search string, generates a set of search results based thereon, and returns such search results to the requesting user, perhaps in the form of a page of information or of links to information that the user may review. In the latter case in particular, the user may access one or more of the links to review content relating to particular search results, and if content associated with one or more links of the search results is acceptable to the user, such user typically proceeds to employ such acceptable content in whatever manner is deemed appropriate.

However, it may instead be the case that the search results are not acceptable to the user in that none of the content thereof satisfies the requested search, at least from the point of view of such user. In such case, the user may decide to enter a new search string or a modification of the previously entered search string and review the search results from the search engine based on such new or modified search string. As should be appreciated, such process may iterate several times in the form of a search session until the user locates acceptable search results or gives up.

Generally, in a high-quality system such as the aforementioned search engine, each query from a user as set forth in a search string should map accurately to search results that represent content that answers the query. Such goal is essential to providing a good searching experience, and in fact meeting such goal can represent the difference between a happy, satisfied user that will return to the search engine with a new search session and an angry, dissatisfied user that will instead visit another search engine.

In order to achieve such a goal, it has been recognized that the system itself should be adjusted or 'tuned' to improve responses and maintain system performance. As may be appreciated, such adjustment may be done mainly although not exclusively based on operational and other data compiled during operation of the system. However, if the system is especially large, has high traffic, or the like, the amount of such data that is available for analysis may be especially large and therefore unwieldy and otherwise difficult to work with. Accordingly, a need exists for a system and method for analyzing large quantifies of data, and especially large quantities of data from a search system or the like.

### SUMMARY OF THE INVENTION

The aforementioned needs are satisfied at least in part by the present invention in which a system is provided for analyzing data from a search engine. The search engine generates a set of Search Results based on a Query String received from a requesting user, where the Query String and the Search Results collectively comprise a User Search. The Search Results include at least one Result, where each Result references a particular item of content believed to be relevant to the Query String. A series of related User Searches comprises a Session, and the search engine stores each User Search and related information.

In the system, a User Search Bundler (USB) analyzes User Searches to find similar ones of such User Searches and group such similar User Searches into User Search Bundles, and an Intent Processor (IP) produces Intents based on User Search Bundles from the USB. Each Intent is a group of one or more Sessions that are believed to be related to each other.

A Factor Generator (FG) considers User Searches and related information to produce Factors, where each Factor is with regard to a particular Result from a set of Search Results. Each Factor relates to one or more Events, where each Event is a piece of information relating to an act that a querying user performed. A Relevance Classifier (RC) receives the Factors as generated by the FG for each Result and operates based thereon to produce a Judgment for the Result, where the Judgment represents a determination of how the user judged the Result upon deciding to access same from the Search Results. A Metric Generator (MG) produces Metrics based on the Factors as generated by the FG and the Judgments as produced by the RC, where each Metric is a measurement relating to a Result, a User Search, or a Session.
Finally, a data synthesizer (DS) extracts data generated by the USB, IP, FG, RC, and MG, formats the extracted data into one or more databases, and stores the databases in a library, whereby the data can be reviewed and aggregated to provide feedback or generate reports.

### BRIEF DESCRIPTION OF THE DRAWINGS

The foregoing summary, as well as the following detailed description of the embodiments of the present invention, will be better understood when read in conjunction with the appended drawings. For the purpose of illustrating the invention, there are shown in the drawings embodiments which are presently preferred. As should be understood, however, the invention is not limited to the precise arrangements and instrumentalities shown. In the drawings:

Fig.1 is a block diagram representing a general purpose computer system in which aspects of the present invention and/or portions thereof may be incorporated; and

Fig. 2 is a block diagram showing a data analysis pipeline for analyzing data from a large system such as a search engine in accordance with embodiments of the present invention.

### DETAILED DESCRIPTION OF THE INVENTION

### COMPUTER ENVIRONMENT

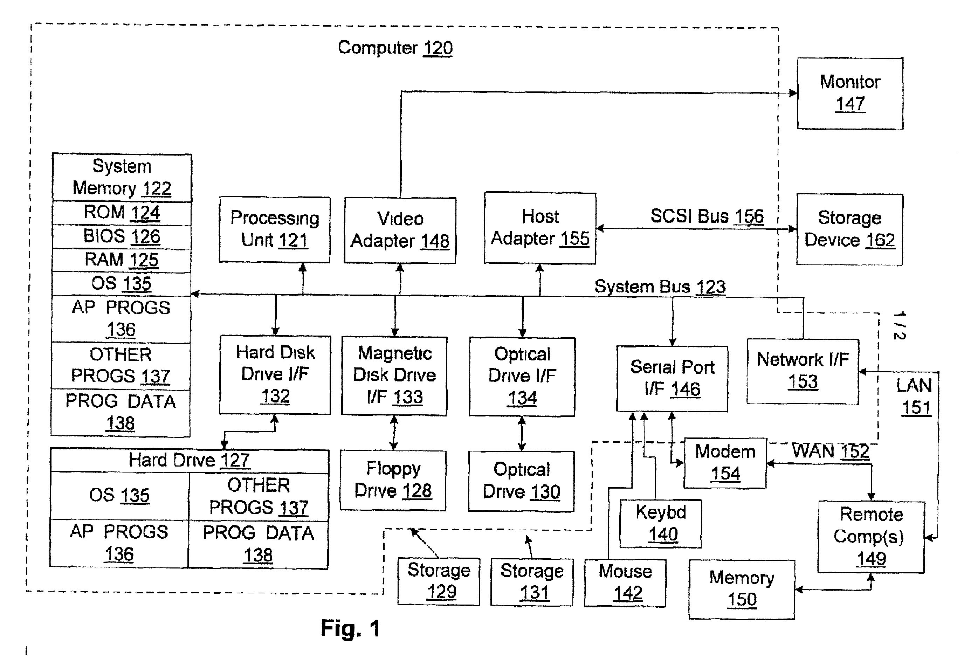

Fig. 1 and the following discussion are intended to provide a brief general description of a suitable computing environment in which the present invention and/or portions thereof may be implemented. Although not required, the invention is described in the general context of computer-executable instructions, such as program modules, being executed by a computer, such as a client workstation or a server. Generally, program modules include routines, programs, objects, components, data structures and the like that perform particular tasks or implement particular abstract data types. Moreover, it should be appreciated that the invention and/or portions thereof may be practiced with other computer system configurations, including hand-held devices, multiprocessor systems, microprocessor-based or programmable consumer electronics, network PCs, minicomputers, mainframe computers and the like. The invention may also be practiced in distributed computing environments where tasks are performed by remote processing devices that are linked through a communications network. In a distributed computing environment, program modules may be located in both local and remote memory storage devices.

As shown in Fig. 1, an exemplary general purpose computing system includes a conventional personal computer 120 or the like, including a processing unit 121, a system memory 122, and a system bus 123 that couples various system components including the system memory to the processing unit 121. The system bus 123 may be any of several types of bus structures including a memory bus or memory controller, a peripheral bus, and a local bus using any of a variety of bus architectures. The system memory includes read-only memory (ROM) 124 and random access memory (RAM) 125. A basic input/output system 126 (BIOS), containing the basic routines that help to transfer information between elements within the personal computer 120, such as during start-up, is stored in ROM 124.

The personal computer 120 may further include a hard disk drive 127 for reading from and writing to a hard disk (not shown), a magnetic disk drive 128 for reading from or writing to a removable magnetic disk 129, and an optical disk drive 130 for reading from or writing to a removable optical disk 131 such as a CD-ROM or other optical media. The hard disk drive 127, magnetic disk drive 128, and optical disk drive 130 are connected to the system bus 123 by a hard disk drive interface 132, a magnetic disk drive interface 133, and an optical drive interface 134, respectively. The drives and their associated computer-readable media provide non-volatile storage of computer readable instructions, data structures, program modules and other data for the personal computer 120.

Although the exemplary environment described herein employs a hard disk, a removable magnetic disk 129, and a removable optical disk 131, it should be appreciated that other types of computer readable media which can store data that is accessible by a computer may also be used in the exemplary operating environment. Such other types of media include a magnetic cassette, a flash memory card, a digital video disk, a Bernoulli cartridge, a random access memory (RAM), a read-only memory (ROM), and the like.

A number of program modules may be stored on the hard disk, magnetic disk 129, optical disk 131, ROM 124 or RAM 125, including an operating system 135, one or more application programs 136, other program modules 137 and program data 138. A user may enter commands and information into the personal computer 120 through input devices such as a keyboard 140 and pointing device 142. Other input devices (not shown) may include a microphone, joystick, game pad, satellite disk, scanner, or the like. These and other input devices are often connected to the processing unit 121 through a serial port interface 146 that is coupled to the system bus, but may be connected by other interfaces, such as a parallel port, game port, or universal serial bus (USB). A monitor 147 or other type of display device is also connected to the system bus 123 via an interface, such as a video adapter 148. In addition to the monitor 147, a personal computer typically includes other peripheral output devices (not shown), such as speakers and printers. The exemplary system of Fig. 1 also includes a host adapter 155, a Small Computer System Interface (SCSI) bus 156, and an external storage device 162 connected to the SCSI bus 156.

The personal computer 120 may operate in a networked environment using logical connections to one or more remote computers, such as a remote computer 149. The remote computer 149 may be another personal computer, a server, a router, a network PC, a peer device or other common network node, and typically includes many or all of the elements described above relative to the personal computer 120, although only a memory storage device 150 has been illustrated in Fig. 1. The logical connections depicted in Fig. 1 include a local area network (LAN) 151 and a wide area network (WAN) 152. Such networking environments are commonplace in offices, enterprise-wide computer networks, intranets, and the Internet.

When used in a LAN networking environment, the personal computer 120 is connected to the LAN 151 through a network interface or adapter 153. When used in a WAN networking environment, the personal computer 120 typically includes a modem 154 or other means for establishing communications over the wide area network 152, such as the Internet. The modem 154, which may be internal or external, is connected to the system bus 123 via the serial port interface 146. In a networked environment, program modules depicted relative to the personal computer 120, or portions thereof, may be stored in the remote memory storage device. It will be appreciated that the network connections shown are exemplary and other means of establishing a communications link between the computers may be used.

### DATA ANALYSIS PIPELINE

Preliminarily, and as a matter of terminology, it is to be appreciated that in connection with a search engine such as that which may be employed in connection with the present invention, each user accessing same requests a search by entering a query comprising a search string with one or more search terms, perhaps with Boolean operators. In response, the search engine generates a set of Search Results based thereon, presuming such Search Results are in fact available, and returns such Search Results to the requesting user. The returned Search Results may include particular items of content or Results that are believed to be relevant to the search request, although it is more likely that each particular Result is instead accessed by way of a corresponding link in the Search Results.

Especially if the returned Search Results are not acceptable, the user may enter another Query String with either a new search string or a modification of the previously entered search string, thereby generating another set of Search Results from the search engine based on the another query. A series of related queries, then, comprises an overall search Session, and hopefully such Session ends when the user locates acceptable Results in Search Results.

During the course of the user entering Query Strings and reviewing Search Results, the search engine or a related entity can and oftentimes does identify and store data related to such Session. In particular, in addition to identifying the Session, the search engine or a related entity (hereinafter, 'search analyzer') may identify and store each Query String of the Session, and the Search Results returned for each Query String, among other things. Moreover, the search analyzer may identify and store for each link of each returned Result of the Search Results whether the user accessed the Result thereby, and how much time the user spent reviewing such Result, among other things. Thus and as should be appreciated, the search analyzer or another entity with such information may develop a qualitative if not quantitative measure of how satisfied or 'happy' the user is with regard to each set of returned Search Results from the Session.

Note that a search analyzer performing the aforementioned functions is known or should be apparent to the relevant public and therefore need not be set forth in any detail. Accordingly, any appropriate search analyzer may be employed in connection with the present invention.

As an example of groups of Query Strings that form Sessions, consider the following Query Strings: "Cars", "Fords", "Ford Edsel", "Cheap vacations", and "London trip prices". It should be appreciated that each Query String is the actual text that the user entered when searching. In addition, each Query String generates a set of Search Results with links to Results, and may have associated therewith by the search analyzer related data such as whether each link was selected, dwell time spent on viewing the Result, scrolling and other actions taken with regard to the Result, and other similar user behaviors.

Based on all of the aforementioned information, it should be recognized that the first three Query Strings (i.e., "Cars", "Fords", "Ford Edsel") are part of a first Session, and that the last two Query Strings (i.e., "Cheap vacations", "London trip prices") are part of a second Session for the reason that the user appeared to have two distinct intents. That said, then, it should be appreciated that a Session is a group of Query Strings and their corresponding Search Results (i.e., User Searches) with the same intent or purpose made consecutively in time by a single user.

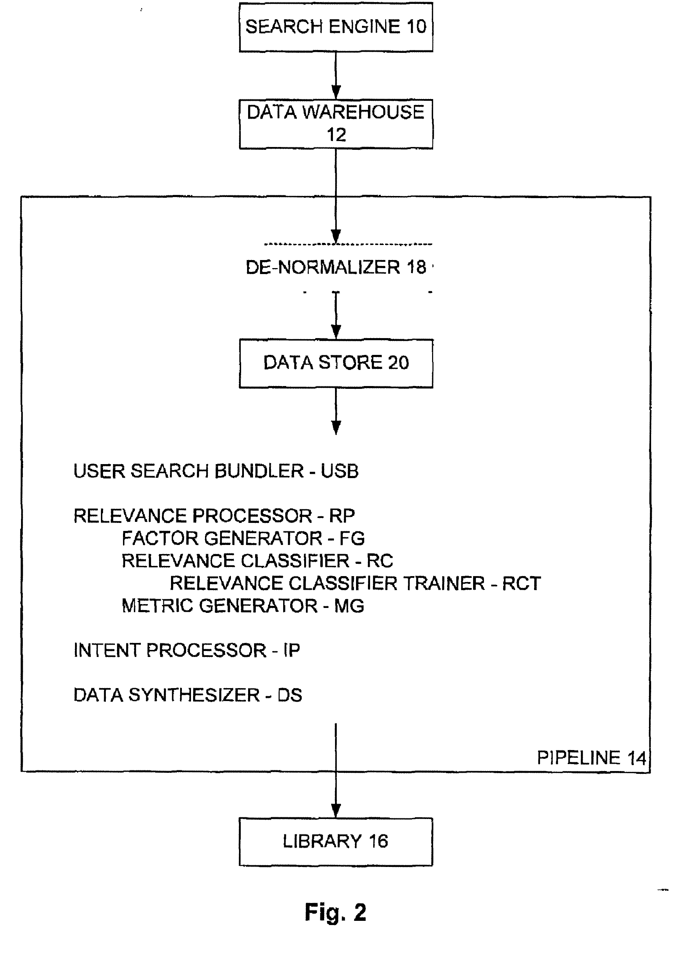

Turning now to Fig. 2, it is seen that the present invention presumes a system such as a search engine 10 for performing requested searches from sear requestors and responding thereto with appropriate search results. Such search engine 10 may of course be any appropriate search engine without departing from the spirit and scope of the present invention. Operation of such search engine 10 is generally known or should be apparent to the relevant public and therefore need not be set forth herein in any detail except as otherwise set forth. More generally, the system may be a system other than the search engine 10, again without departing from the spirit and scope of the present invention.

As also seen in Fig. 2, it is presumed that a data warehouse 12 is maintained in connection with the system / search engine 10. As may be appreciated, the data warehouse 12 stores data in connection with the operation of the search engine 10, perhaps including but not limited to the aforementioned data as produced by a search analyzer. Such data as may be stored by the data warehouse 12 may of course be any other appropriate data without departing from the spirit and scope of the present invention, and the data warehouse 12 and organization thereof may likewise be any appropriate data warehouse and organization without departing from the spirit and scope of the present invention.

As may be appreciated, the data within the data warehouse 12 may grow indefinitely or may be periodically expired and deleted. Thus, in the present invention, a pipeline 14 is employed to analyze such data, and as set forth in more detail below may analyze any portion of the data within the data warehouse 12, including all of the data or a sliding window of the data. As will be seen, such data analysis as performed by the pipeline 14 may include several components, each of which takes a portion of the data from the warehouse and operates thereon. In one embodiment of the present invention, the output of the pipeline 14 is placed in a library 16 with output data organized into a form such as a relational database, a multidimensional table, or the like. Thus, with appropriate controls, a user at a web browser or the like can view such organized data and perhaps further analyze same.

As may be appreciated, the processes performed by the pipeline 14 provide statistics on how the search engine 10 is being employed. In addition, and in one embodiment of the present invention, such performed processes are employed to identify patterns in how the search engine 10 is being employed by users thereof, especially inasmuch as such patterns can provide truly valuable information.

Note that the data in the warehouse 12 may be highly normalized, especially inasmuch as it may be appreciated that normalizing such data allows new data to be added in an efficient manner. However, such normalized data must be de-normalized prior to analysis, and accordingly the data pipeline 14 may include as an input thereof a de-normalizer 18. Such a de-normalizer 18 may be any appropriate de-normalizer and may operate in any appropriate manner. Operation of such de-normalizer 18 is known or should be apparent to the relevant public and therefore need not be set forth herein in any detail.

The de-normalizer 18 as employed in the pipeline 14 of the present invention de-normalizes the data in the warehouse 12, and may also creates batches of the de-normalized data for later processing. Batching may be performed according to any appropriate criteria. For example, a batch could be all data that has arrived since a prior batch of data, where a batch could be a day of data if the de-normalizer 18 is operated once per day. Similarly, the de-normalizer 18 could be operated once per week but be set to generate a batch for each hour in the week.

As seen, the batches output by the de-normalizer 18 are stored in a data store 20 for further processing by other components of the pipeline 14. Such data store 20 and the organization of the batches therein may be any appropriate store and organization without departing from the spirit and scope of the present invention. As shown in Fig. 2, components that employ the batches of data in the data store 20 may include a User Search Bundler (USB), a Relevance Processor (RP), an Intent Processor (IP), a Data Synthesizer (DS) and the like.

The User Search Bundler (USB) of the data pipeline 14 analyzes User Searches, each of which is an instance of a user invoking a query on the search engine 10, and includes information regarding both the Query String and the returned Search Results, among other things. Two users invoking the same Query String produce two User Searches, and a single user invoking the same Query String twice also results in two User Searches. In one embodiment of the present invention, the USB tries to find User Searches that "look alike" and thus are similar, and groups such similar User Searches into User Search Bundles. The USB may operate in any appropriate manner without departing from the spirit and scope of the present invention. Methods of operating a USB are known or should be apparent to the relevant public and therefore need not be set forth herein in any detail.

For example, the USB may employ a "Look Alike" algorithm that analyzes Query Strings. For example, if two users each invoke a search for "Wilkes-Barre, PA", then those Query Strings look alike. More interestingly, if one user searches for "duck" and another searches for "ducks" (one plural, one singular), those two Query Strings "look alike" too inasmuch as the algorithm employs stemming, case normalization, and other similar query compression techniques.

However, the USB is not limited to analyzing Query Strings for similarity. Instead, and in one embodiment of the present invention, the USB may also employ a returned Search Results analysis algorithm. For example, the USB may conclude based on the returned Search Results analysis algorithm that two User Searches are similar each produces a similar set of Search Results, even if the corresponding Query Strings are not at all similar. In addition or in the alternative, the USB may conclude based on a content satisfaction analysis algorithm that two User Searches are similar if each produces a specific piece of content or Result that the user was determined to have been satisfied with, again even if the corresponding Query Strings are not at all similar. Likewise, the USB may conclude based on a content dissatisfaction analysis algorithm that two User Searches are similar if each produces a specific Result that the user was determined to have been unsatisfied with.

The output of the USB may be stored in the library 16 as a database of bundled User Searches. Alternatively, such output may be stored back in the data store 20 to be available to other components of the pipeline 14.

The Relevance Processor (RP) of the present invention may be sub-divided into a Factor Generator (FG), a Relevance Classifier (RC), and a Metric Generator (MG). Note, though, that such sub-divided elements of the RP may instead be individually present in the pipeline 14 of the present invention without being grouped under the RP.

The Factor Generator (FG) considers information relating to User Searches and produces Factors, where such Factor are applied as inputs to the Relevance Classifier (RC). Each Factor is with regard to a particular Result from a set of Search Results. Factors are often but not always produced by considering several Events, where each Event typically is a piece of information relating to an act that a querying user performed. For example, selecting a particular Result may be an Event, as may be the Result being displayed, closed, printed, added to a particular list, re-opened, and the like. Events may also include explicit user feedback if provided.

In one embodiment of the present invention, then, the FG computes values based on Events. For example, the FG may compute a "Dwell Time" as a Factor that represents the length of time a user viewed a Result, and may do so based on the difference in time between when the user started and stopped looking at the Result, each as represented by a corresponding time-stamped Event. Note, though, that other Events may also be considered by the FG when generating a Dwell Time Factor, including whether the user may have interrupted viewing the Result, as represented by other appropriate time-stamped Events.

Another Factor generated by the FG may be a Factor for whether the user added a Result to a particular list such as a Favorites list. In such case, it may be that such a "Favorite" Factor is set to a true value. As may now be appreciated, types of Factors based on Events may be any appropriate Factors without departing from the spirit and scope of the present invention. Such Factors are known or should be apparent to the relevant public and therefore need not be set forth herein in any detail.

Note that Factors may also come from things other than Events. For example, a Factor might be an identifier of the user that authored the Result. Thus, a Factor may be a property of a Result. Other Factors may include a locale of the query string (e.g. US-English, Canadian-English, Brazilian-Portuguese), and may be derived from information in a User Search. More generally, a Factor may be produced by the FG or by another component from any piece of information available without departing from the spirit and scope of the present invention.

The Factors as generated by the FG and perhaps elsewhere may be stored in the library 16 in an appropriate database. Alternatively, such Factors may be stored back in the data store 20 to be available to other components of the pipeline 14, or may be delivered directly to such components.

The Relevance Classifier (RC) of the Relevance Processor (RP) receives the Factors as generated by the FG and perhaps elsewhere. The RC is a machine-generated decision tree which operates based on the received Factors as inputs thereto. Upon being initiated by the RP, the RC reads the Factors for a Result from the data store 20 or elsewhere and produces a Judgment for the Result. Such Judgment, generally, is a determination of how the user judged the Result upon deciding to access same from a set of Search Results.

The Judgment may be expressed according to any appropriate judging system without departing from the spirit and scope of the present invention. For example, the Judgment may be a numerical or letter grade score, may be one of "Accept" (i.e., the user was satisfied with the Result), "Explore" (i.e., the user was neither satisfied nor dissatisfied with the Result), and "Reject" (i.e., the user was dissatisfied with the Result), or the like. In addition, the Judgment for a particular Result may also include a value indicative of a confidence for how likely the Judgment is correct, as determined by the RC.

The Judgments as generated by the RC and perhaps elsewhere may be stored in the library 16 in an appropriate database. Alternatively, such Factors may be stored back in the data store 20 to be available to other components of the pipeline 14, or may be delivered directly to such components.

To machine-generate the decision tree of the RC, it may be the case that the RP considers each Result that has an Explicit Judgment Factors. An Explicit Judgment is a type of Factor that represents explicit feedback from a user regarding a Result. By taking each Result that has an Explicit Judgment Factor and analyzing other available Factors for that Result, a Relevance Classifier Trainer (RCT) of the RP or elsewhere is able to "learn" what Factors imply which Judgments and based thereon construct the RC. Learning what the Factors imply and constructing the RC therefrom may be done in any appropriate manner without departing from the spirit and scope of the present invention.
Doing so is known or should be apparent to the relevant public and therefore need not be set forth herein in any detail.

The Metric Generator (MG) of the RP produces Metrics, where a Metric is a measurement about a Result, a User Search, a Session, or the like. Generally, the MG produces such Metrics based on the Factors as generated by the FG and perhaps elsewhere, the Judgments as produced by the RC, and other related information available. Generating such Metrics may be done in any appropriate manner without departing from the spirit and scope of the present invention. Doing so is known or should be apparent to the relevant public from information disclosed below and therefore need not be set forth herein in any detail.

The MG may produce the following Metrics with regard to a Result:
- Accept, Explore, Reject: Each is derived from a Judgment for the Result and may include a confidence.
- Mis-ranked Result: A measure of how 'far' the Result was from where same should have been, based on how the Result was positioned within the Search Results and how the user was judged to have ranked the Result.
- Position: How the user was judged to have ranked the Result.
- Relevance Position: How the Result was positioned within the Search Results.

The MG may produce the following Metrics with regard to a User Search:
- Result Set Ranking Score: Similar to the Mis-ranked Result metric produced for each Result, but with regard to the all Results of a User Search. Such value attempts to reflect how far apart a result set is from what should have been.
- Accept, Explore, Reject Summarized: Summaries of all Accept, Explore, and Reject metrics, respectively, for each Result in the User Search.

The MG may produce the following Metrics with regard to a Session:
- Content Quantity: Whether the Session shows a lack of available information for what the user is searching for.
- Intent Determination: Whether the Session shows an inability to determine what the user is searching for.
The Metrics as generated by the MG and perhaps elsewhere may be stored in the library 16 in an appropriate database. Alternatively, such Metrics may be stored back in the data store 20 to be available to other components of the pipeline 14, or may be delivered directly to such components.

The Intent Processor (IP) of the pipeline 14 produces Intents, where each Intent is a group of one or more Sessions that are believed to be related to each other because the user is looking for the same Search Results in each instance. That is, an Intent is a group of Sessions sharing a common purpose.

The IP produces Intents by considering each Session, each User Search of each Session, and each Result of each User Search. In one embodiment of the present invention, and bearing in mind that Sessions with common Results are likely to be related, only Results with a Judgment of Accept are investigated. However, Results with other Judgments may also be employed without departing from the spirit and scope of the present invention.

Generally, the IP determines a relationship value between Sessions by locating common Results across Sessions and common Query Terms across Sessions based on reviewed User Search Bundles and ascertaining a Strength of Commonality when found. Such Strengths represent how likely two Sessions are to be related to each other by having a common purpose. Session pairs having a Strength above some determined threshold, then, may be bundled by the IP into an Intent.

The Intents as generated by the IP and perhaps elsewhere may be stored in the library 16 in an appropriate database. Alternatively, such Intents may be stored back in the data store 20 to be available to other components of the pipeline 14, or may be delivered directly to such components.

Finally, with all the data produced thus far, the pipeline 14 includes a data synthesizer (DS) that extracts such data from the data store 12, library 20, or elsewhere and formats such data into one or more databases that are to be stored in the library 20. Such formatting is necessary especially if different components wrote data to different tables, databases, or the like. For example, the USB may have added data about each User Search into a User Search Bundled table, and the MG might have added data into a Metrics table. Thus, the DS join such tables and others as appropriate into a meaningful form from which such data may be searched, aggregated, presented, or the like.

Note that the DS may be programmed to format only portions of the data as appropriate. For example, the DS may omit some of the stored data if such data is deemed to be not useful. Alternatively, the DS may copy the same data to multiple tables or split data into multiple tables. More generally, the DS may be programmed to format the data from the pipeline 14 into any appropriate format without departing from the spirit and scope of the present invention.

In one embodiment of the present invention, the DS formats the data into a relational database such as an SQL database or the like. As such, the data may be represented in a 'star' form with fact tables in the center and dimension tables surrounding same. As may be appreciated, by doing so, the fact and dimension tables can then be built into a data cube such as an OLAP cube or the like that allows an administrator of the search engine 10 or the like to efficiently aggregate the data based on different criteria. For example, such administrator or the like can ask the cube to find the average of the Intent Determination Metric for every Session existing in a certain date range, aggregating same by Intent. Likewise, reports may be run against the cube and results therefrom may then be forwarded to such administrator or the like. Of course, such administrator or the like may also posit most any other appropriate query against such a cube or receive any other report as run against such a cube.

### CONCLUSION

The present invention may be practiced with regard to analyzing data from most any appropriate system including a search engine 10 or otherwise. As should now be appreciated, with the present invention as set forth herein, data representative of the system may be analyzed for any purpose, including adjusting or 'tuning' the system to improve responses, maintain system performance, and otherwise ensure that the system is operating satisfactorily.

The programming necessary to effectuate the processes performed in connection with the present invention is relatively straight-forward and should be apparent to the relevant programming public. Accordingly, such programming is not attached hereto. Any particular programming, then, may be employed to effectuate the present invention without departing from the spirit and scope thereof.

In the foregoing description, it can be seen that the present invention comprises a new and useful apparatus that analyzes large quantifies of data, and especially large quantities of data from a search engine 10 or the like. Such apparatus is especially useful when the search engine 10 is especially large, has high traffic, or the like, and the amount of such data that is available for analysis is especially large and therefore unwieldy and otherwise difficult to work with.

It should be appreciated that changes could be made to the embodiments described above without departing from the inventive concepts thereof. In general then, it should be understood, therefore, that this invention is not limited to the particular embodiments disclosed, but it is intended to cover modifications within the spirit and scope of the present invention as defined by the appended claims.

## Claims

1. A system for analyzing data from a search engine, the search engine generating a set of Search Results based on a Query String received from a requesting user, the Query String and the Search Results collectively comprising a User Search, the Search Results including at least one Result, each Result referencing a particular item of content believed to be relevant to the Query String, whereby a series of related User Searches comprises a Session, the search engine storing each User Search and related information, the system comprising:
a User Search Bundler (USB) analyzing User Searches to find similar ones of such User Searches and group such similar User Searches into User Search Bundles;
an Intent Processor (IP) producing Intents based on User Search Bundles from the USB, each Intent being a group of one or more Sessions that are believed to be related to each other;
a Factor Generator (FG) considering User Searches and related information to produce Factors, each Factor being with regard to a particular Result from a set of Search Results, each Factor relating to one or more Events, each Event being a piece of information relating to an act that a querying user performed;
a Relevance Classifier (RC) receiving the Factors as generated by the FG for each Result and operating based thereon to produce a Judgment for the Result, the Judgment representing a determination of how the user judged the Result upon deciding to access same from the Search Results;
a Metric Generator (MG) producing Metrics based on the Factors as generated by the FG and the Judgments as produced by the RC, each Metric being a measurement relating to a Result, a User Search, or a Session; and
a data synthesizer (DS) extracting data generated by the USB, IP, FG, RC, and MG, formatting the extracted data into one or more databases, and storing the databases in a library, whereby the data can be reviewed and aggregated to provide feedback or generate reports.

2. The system of claim 1 wherein the search engine stores each Query String and the corresponding Search Results and related information in a data warehouse and in a normalized form, the system further comprising a de-normalizer retrieving the normalized data from the data warehouse, normalizing same, and storing the normalized data in a data store.

3. The system of claim 1 wherein the USB analyzes the User Searches for at least one of similarity of Query Strings and similarity of Search Results.

4. The system of claim 1 wherein each Event includes a time when the user performed at least one of selecting and closing a particular Result, and wherein the FG computes a "Dwell Time" Factor that represents a length of time a user viewed a Result, the Dwell Time Factor being based on a difference in time between when the user selected and closed the Result, each as represented by a corresponding time-stamped Event.

5. The system of claim 1 wherein the RC produces a Judgment comprising at least one of an "Accept" Judgment, an "Explore" Judgment, and a "Reject" Judgment and a corresponding value indicative of a confidence for how likely the Judgment is correct.

6. The system of claim 1 further comprising a Relevance Classifier Trainer receiving Explicit Judgment Factors from the FG and generating the RC based thereon, each Explicit Judgment Factor representing explicit feedback from the user regarding the corresponding Result, the RCT learning from the Explicit Judgment Factors what Factors imply which Judgments and based thereon generating the RC.

7. The system of claim 1 wherein the MG produces with regard to a Result at least one of:
a Position Metric regarding how the user was judged to have ranked the Result;
a Relevance Position Metric regarding how the Result was positioned within the Search Results; and
a Mis-ranked Result Metric regarding how 'far' the Result was from where same should have been, based on the Position Metric and the Relevance Position Metric.

8. The system of claim 1 wherein the IP determines a relationship value between Sessions by locating common Results across Sessions and common Query Terms across Sessions based on reviewed User Search Bundles, and ascertains a Strength of Commonality when such common Results are found, such Strength of Commonality representing how likely two Sessions are to be related to each other by having a common purpose, the IP bundling Session pairs having a Strength of Commonality above a determined threshold into an Intent.

9. The system of claim 1 wherein the DS formats the extracted data into a relational database.

10. A method for analyzing data from a search engine, the search engine generating a set of Search Results based on a Query String received from a requesting user, the Query String and the Search Results collectively comprising a User Search, the Search Results including at least one Result, each Result referencing a particular item of content believed to be relevant to the Query String, whereby a series of related User Searches comprises a Session, the search engine storing each User Search and related information, the method comprising:
analyzing User Searches to find similar ones of such User Searches and group such similar User Searches into User Search Bundles;
producing Intents based on User Search Bundles from the USB, each Intent being a group of one or more Sessions that are believed to be related to each other;
considering User Searches and related information to produce Factors, each Factor being with regard to a particular Result from a set of Search Results, each Factor relating to one or more Events, each Event being a piece of information relating to an act that a querying user performed;
receiving the Factors as generated for each Result and operating based thereon to produce a Judgment for the Result, the Judgment representing a determination of how the user judged the Result upon deciding to access same from the Search Results;
producing Metrics based on the Factors and the Judgments, each Metric being a measurement relating to a Result, a User Search, or a Session; and
extracting data including the User Search Bundles, the Intents, the Factors, the Judgments, and the Metrics, formatting the extracted data into one or more databases, and storing the databases in a library, whereby the data can be reviewed and aggregated to provide feedback or generate reports.

11. The method of claim 10 comprising storing each Query String and the corresponding Search Results and related information in a data warehouse and in a normalized form, and further comprising retrieving the normalized data from the data warehouse, normalizing same, and storing the normalized data in a data store.

12. The method of claim 10 comprising analyzing the User Searches for at least one of similarity of Query Strings and similarity of Search Results.

13. The method of claim 10 wherein each Event includes a time when the user performed at least one of selecting and closing a particular Result, the method comprising computing a "Dwell Time" Factor that represents a length of time a user viewed a Result, the Dwell Time Factor being based on a difference in time between when the user selected and closed the Result, each as represented by a corresponding time-stamped Event.

14. The method of claim 10 comprising producing a Judgment comprising at least one of an "Accept" Judgment, an "Explore" Judgment, and a "Reject" Judgment and a corresponding value indicative of a confidence for how likely the Judgment is correct.

15. The method of claim 10 further comprising receiving Explicit Judgment Factors and generating a Relevance Classifier (RC) based thereon, the RC receiving the Factors as generated for each Result and operating based thereon to produce the Judgment for the Result, each Explicit Judgment Factor representing explicit feedback from the user regarding the corresponding Result such that what Factors imply which Judgments can be learned based on such Explicit Judgment Factors.

16. The method of claim 10 comprising producing with regard to a Result at least one of:
a Position Metric regarding how the user was judged to have ranked the Result;
a Relevance Position Metric regarding how the Result was positioned within the Search Results; and
a Mis-ranked Result Metric regarding how 'far' the Result was from where same should have been, based on the Position Metric and the Relevance Position Metric.

17. The method of claim 10 comprising determining a relationship value between Sessions by locating common Results across Sessions and common Query Terms across Sessions based on reviewed User Search Bundles, and ascertaining a Strength of Commonality when such common Results are found, such Strength of Commonality representing how likely two Sessions are to be related to each other by having a common purpose, Session pairs having a Strength of Commonality above a determined threshold being bundled into an Intent.

18. The method of claim 10 comprising formatting the extracted data into a relational database.
